# EUROPEAN PATENT APPLICATION

(11) **EP 4 492 854 A1**
(43) Date of publication of application: **15.01.2025**
(21) Application number: 23787490.4
(22) Date of filing: 23.03.2023
(51) Int. Cl.: H04W 24/02

(54) **COMMUNICATION METHOD AND DEVICE**

(30) Priority: 11.04.2022 CN 202210376192
(71) Applicant: Huawei Technologies Co., Ltd., Shenzhen, Guangdong 518129 (CN)
(72) Inventor: GAN, Ming, Shenzhen, Guangdong 518129 (CN); LIN, Yousi, Shenzhen, Guangdong 518129 (CN); YANG, Xun, Shenzhen, Guangdong 518129 (CN); LI, Yunbo, Shenzhen, Guangdong 518129 (CN); GUO, Yuchen, Shenzhen, Guangdong 518129 (CN); HUANG, Guogang, Shenzhen, Guangdong 518129 (CN)
(74) Representative: Körber, Martin Hans
(86) International application number: PCT/CN2023/083407
(87) International publication number: WO 2023/197843

(57) **Abstract**

This application relates to the communication field, and in particular, to a communication method and apparatus applicable to a multi-link device. This solution is applied to a wireless local area network system that supports 802.11 series protocols such as a next-generation Wi-Fi protocol of IEEE 802.11ax, for example, 802.11be, Wi-Fi 7, or EHT, or for another example, a next generation of 802.11be, or Wi-Fi 8, or is applied to an ultra wideband UWB-based wireless personal area network system or a sensing (sensing) system. The method includes: A first AP sends first information to a first STA MLD, where the first information indicates whether a key BSS parameter corresponding to at least one AP of a first AP MLD changes. In this way, when the key BSS parameter corresponding to the at least one AP of the first AP MLD changes, a first STA can learn in time, thereby helping improve communication reliability.

## Description

This application claims priority to Chinese Patent Application No. 202210376192.0, filed on April 11, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

To greatly increase a service transmission rate of a wireless local area network (wireless local area network, WLAN) system, an orthogonal frequency division multiple access (orthogonal frequency division multiple access, OFDMA) technology is further used in the Institute of Electrical and Electronics Engineers (Institute of Electrical and Electronics Engineers, IEEE) 802.11ax standard based on an existing orthogonal frequency division multiplexing (orthogonal frequency division multiplexing, OFDM) technology. The OFDMA technology supports a plurality of nodes in sending and receiving data simultaneously. This achieves multi-station diversity gains.

A next-generation Wi-Fi standard, IEEE 802.11be, is referred to as an extremely high throughput (extremely high throughput, EHT) or Wi-Fi 7, and its most important technical objective is to significantly improve a peak throughput. According to the IEEE 802.11be standard, a WLAN device supports a plurality of streams (a maximum quantity of spatial streams is 16), a plurality of frequency bands (for example, frequency bands of 2.4 GHz, 5 GHz, and 6 GHz), and cooperation of a plurality of channels in a same frequency band, to improve the peak throughput and reduce service transmission latency. The plurality of frequency bands or the plurality of channels may be collectively referred to as multiple links. A next-generation IEEE 802.11 standard station device that supports a plurality of links at the same time is referred to as a multi-link device (multi-link device, MLD).

A traffic indication map (traffic indication map, TIM) broadcast (broadcast) feature indicates that a station (station, STA) or a station multi-link device may receive a TIM frame within a specified time interval, to obtain update information of a key basic service set (basic service set (basic service set, BSS)) parameter of an access point (access point, AP) associated with the station or the station multi-link device. However, in the conventional technology, a manner in which the station multi-link device obtains the update information of the key BSS parameter affects communication reliability.

### SUMMARY

Embodiments of this application provide a communication method and apparatus, to improve communication reliability.

According to a first aspect, a communication method is provided and applied to a first access point multi-link device (access point multi-link device, AP MLD). The method may be performed by the first AP MLD, or may be performed by a chip or circuit configured in the first AP MLD. This is not limited in this application. The following uses the first AP MLD as an example for description.

The method may include: A first AP of the first AP MLD generates first information, where the first information indicates whether a key BSS parameter corresponding to at least one AP of the first AP MLD changes. The first AP sends the first information to a first station multi-link device (station multi-link device, STAMLD).

Based on this solution, the first AP may indicate, to the first STA MLD based on the first information, whether the key BSS parameter corresponding to the at least one AP of the first AP MLD changes. Further, a first STA may determine, based on the first information, whether to obtain a key BSS parameter of an AP of the first AP MLD. In this way, when the key BSS parameter corresponding to the at least one AP of the first AP MLD changes, the first STA MLD can learn in time, so that the first STAMLD and the first AP MLD can communicate normally, thereby helping improve communication reliability.

With reference to the first aspect, in some implementations of the first aspect, the first information is a count value.

With reference to the first aspect, in some implementations of the first aspect, if the key BSS parameter corresponding to the at least one AP of the first AP MLD changes, a value of the first information is increased.

With reference to the first aspect, in some implementations of the first aspect, if no key BSS parameters corresponding to APs of the first AP MLD change, a value of the first information remains unchanged.

With reference to the first aspect, in some implementations of the first aspect, the first information is carried in a check beacon field.

Based on this solution, in this application, the check beacon field can be reused, flexibility is high, and implementation is easy.

With reference to the first aspect, in some implementations of the first aspect, the check beacon field is carried in a traffic indication map TIM frame.

Based on this solution, in this embodiment of this application, a non-multi-link station may be compatible, so that the non-multi-link station may also correctly parse the TIM frame, and scalability is strong.

With reference to the first aspect, in some implementations of the first aspect, the first information indicates that the key BSS parameter corresponding to the at least one AP of the first AP MLD changes, and the method further includes: The first AP receives a first frame, where the first frame is for requesting a key BSS parameter corresponding to an AP associated with a second STA, and the second STA is a station that is in the first STA MLD and that is associated with the first AP MLD. The first AP sends a second frame, where the second frame includes the key BSS parameter corresponding to the AP associated with the second STA.

Based on this solution, if the first STA determines that the key BSS parameter corresponding to the at least one AP of the first AP MLD changes, the first STA may further obtain, based on the first frame and the second frame, the key BSS parameter of the AP associated with the second STA, thereby helping improve communication reliability of the first STAMLD.

With reference to the first aspect, in some implementations of the first aspect, the second STA is all STAs of the first STAMLD.

With reference to the first aspect, in some implementations of the first aspect, the key BSS parameter includes one or more of the following: inclusion of a channel switch announcement element, inclusion of an extended channel switch announcement element, modification of the enhanced distributed channel access EDCA parameters element, inclusion of a quiet element, modification of the direct sequence spread spectrum DSSS parameter set, modification of the contention free CF parameter set element, modification of the high throughput HT operation element, inclusion of a wide bandwidth channel switch element, inclusion of a channel switch wrapper element, inclusion of an operating mode notification element, inclusion of a quiet channel element, modification of the very high throughput VHT operation element, modification of the high efficiency HE operation element, insertion of a broadcast TWT element, inclusion of the BSS color change announcement element, modification of the multi-user EDCA parameter set element, modification of the spatial reuse parameter set element, and modification of the extremely high throughput operation element.

According to a second aspect, a communication method is provided and applied to a first station multi-link device (station multi-link device, STAMLD). The method may be performed by the first STA MLD, or may be performed by a chip or circuit configured in the first STA MLD. This is not limited in this application. The following uses the first STA MLD as an example for description.

The method may include: A first STA of the first STAMLD receives first information, where the first information indicates whether a key BSS parameter corresponding to at least one AP of a first AP MLD changes. The first STA determines, based on the first information, whether the key BSS parameter corresponding to the at least one AP of the first AP MLD changes.

Based on this solution, a first AP may indicate, to the first STA MLD based on the first information, whether the key BSS parameter corresponding to the at least one AP of the first AP MLD changes. Further, the first STA may determine, based on the first information, whether to obtain a key BSS parameter of an AP of the first AP MLD. In this way, when the key BSS parameter corresponding to the at least one AP of the first AP MLD changes, the first STA MLD can learn in time, so that the first STAMLD and the first AP MLD can communicate normally, thereby helping improve communication reliability.

With reference to the second aspect, in some implementations of the second aspect, the first information is a count value.

With reference to the second aspect, in some implementations of the second aspect, the method further includes: The first STA records the first information.

With reference to the second aspect, in some implementations of the second aspect, that the first STA determines, based on the first information, whether the key BSS parameter corresponding to the at least one AP of the first AP MLD changes includes: The first station determines, based on whether a value of the first information is the same as a value of second information, whether the key BSS parameter corresponding to the at least one AP of the first AP MLD changes, where the second information is information received before the first STA receives the first information, and the second information indicates whether the key BSS parameter corresponding to the at least one AP of the first AP MLD changes.

With reference to the second aspect, in some implementations of the second aspect, that the first station determines, based on whether a value of the first information is the same as a value of second information, whether the key BSS parameter corresponding to the at least one AP of the first AP MLD changes includes: if the value of the first information is the same as the value of the second information, the first STA determines that no key BSS parameters corresponding to APs of the first AP MLD change; and/or if the value of the first information is different from the value of the second information, the first STA determines that the key BSS parameter corresponding to the at least one AP of the first AP MLD changes.

With reference to the second aspect, in some implementations of the second aspect, the value of the first information is different from the value of the second information, and the method further includes: A second STA of the first STA MLD receives a beacon frame, where the beacon frame includes a key BSS parameter corresponding to an AP associated with the second STA, and the second STA is a station that is in the first STA MLD and that is associated with the first AP MLD.

Based on this solution, if the first STA determines that the key BSS parameter corresponding to the at least one AP of the first AP MLD changes, both the first STA and the second STA can receive the beacon frame, to obtain the key BSS parameter of the AP associated with the STA. In this way, the second STA of the first STA MLD can also obtain the key BSS parameter of a BSS in which the second STA is located, thereby helping improve communication reliability of the second STA.

With reference to the second aspect, in some implementations of the second aspect, the value of the first information is different from the value of the second information, and the method further includes: The first STA sends a first frame, where the first frame is for requesting a key BSS parameter corresponding to an AP associated with a second STA, and the second STA is a station that is in the first STAMLD and that is associated with the first AP MLD. The first station receives a second frame, where the second frame includes the key BSS parameter corresponding to the AP associated with the second STA.

Based on this solution, if the first STA determines that the key BSS parameter corresponding to the at least one AP of the first AP MLD changes, the first STA may further obtain, based on the first frame and the second frame, the key BSS parameter of the AP associated with the second STA, thereby helping improve communication reliability of the first STAMLD.

With reference to the second aspect, in some implementations of the second aspect, the second STA is all STAs of the first STAMLD.

With reference to the second aspect, in some implementations of the second aspect, the first information is carried in a check beacon field.

Based on this solution, in this application, the check beacon field can be reused, flexibility is high, and implementation is easy.

With reference to the second aspect, in some implementations of the second aspect, the check beacon field is carried in a traffic indication map TIM frame.

Based on this solution, in this embodiment of this application, a non-multi-link station may be compatible, so that the non-multi-link station may also correctly parse the TIM frame, and scalability is strong.

With reference to the second aspect, in some implementations of the second aspect, the key BSS parameter includes one or more of the following: inclusion of a channel switch announcement element, inclusion of an extended channel switch announcement element, modification of the EDCA parameters element, inclusion of a quiet element, modification of the DSSS parameter set, modification of the CF parameter set element, modification of the HT operation element, inclusion of a wide bandwidth channel switch element, inclusion of a channel switch wrapper element, inclusion of an operating mode notification element, inclusion of a quiet channel element, modification of the VHT operation element, modification of the HE operation element, insertion of a broadcast TWT element, inclusion of the BSS color change announcement element, modification of the multi-user EDCA parameter set element, modification of the spatial reuse parameter set element, and modification of the extremely high throughput operation element.

According to a third aspect, a communication apparatus is provided. The apparatus may be a first AP MLD, or a chip or circuit configured in the first AP MLD. Alternatively, the apparatus may be a first AP of the first AP MLD, or a chip or circuit configured in the first AP of the first AP MLD.

The apparatus includes: a processing unit, configured to generate first information, where the first information indicates whether a key BSS parameter corresponding to at least one AP of the apparatus changes; and a transceiver unit, configured to send the first information to a first STA MLD.

With reference to the third aspect, in some implementations of the third aspect, the first information is a count value.

With reference to the third aspect, in some implementations of the third aspect, if the key BSS parameter corresponding to the at least one AP of the apparatus changes, a value of the first information is increased.

With reference to the third aspect, in some implementations of the third aspect, if no key BSS parameters corresponding to APs of the apparatus change, a value of the first information remains unchanged.

With reference to the third aspect, in some implementations of the third aspect, the first information is carried in a check beacon field.

With reference to the third aspect, in some implementations of the third aspect, the check beacon field is carried in a traffic indication map TIM frame.

With reference to the third aspect, in some implementations of the third aspect, the first information indicates that the key BSS parameter corresponding to the at least one AP of the apparatus changes, and the transceiver unit is further configured to: receive a first frame from a first STA, where the first frame is for requesting a key BSS parameter corresponding to an AP associated with a second STA, and the second STA is a station that is in the first STA MLD and that is associated with the apparatus; and send a second frame to the first STA, where the second frame includes the key BSS parameter corresponding to the AP associated with the second STA.

With reference to the third aspect, in some implementations of the third aspect, the second STA is all STAs of the first STAMLD.

With reference to the third aspect, in some implementations of the third aspect, the key BSS parameter includes one or more of the following: inclusion of a channel switch announcement element, inclusion of an extended channel switch announcement element, modification of the enhanced distributed channel access EDCA parameters element, inclusion of a quiet element, modification of the direct sequence spread spectrum DSSS parameter set, modification of the contention free CF parameter set element, modification of the high throughput HT operation element, inclusion of a wide bandwidth channel switch element, inclusion of a channel switch wrapper element, inclusion of an operating mode notification element, inclusion of a quiet channel element, modification of the very high throughput VHT operation element, modification of the high efficiency HE operation element, insertion of a broadcast TWT element, inclusion of the BSS color change announcement element, modification of the multi-user EDCA parameter set element, modification of the spatial reuse parameter set element, and modification of the extremely high throughput operation element.

According to a fourth aspect, a communication apparatus is provided. The apparatus may be a first STAMLD, or a chip or circuit configured in the first STAMLD. Alternatively, the apparatus may be a first STA of the first STA MLD and/or a second STA, or a chip or circuit configured in the first STA and/or the second STA of the first STAMLD.

The apparatus may include: a transceiver unit, configured to receive first information, where the first information indicates whether a key BSS parameter corresponding to at least one AP of a first AP MLD changes; and a processing unit, configured to determine, based on the first information, whether the key BSS parameter corresponding to the at least one AP of the first AP MLD changes.

With reference to the fourth aspect, in some implementations of the fourth aspect, the first information is a count value.

With reference to the fourth aspect, in some implementations of the fourth aspect, the processing unit is further configured to record the first information.

With reference to the fourth aspect, in some implementations of the fourth aspect, the processing unit is specifically configured to: determine, based on whether a value of the first information is the same as a value of second information, whether the key BSS parameter corresponding to the at least one AP of the first AP MLD changes, where the second information is information received before the apparatus receives the first information, and the second information indicates whether the key BSS parameter corresponding to the at least one AP of the first AP MLD changes.

With reference to the fourth aspect, in some implementations of the fourth aspect, the processing unit is specifically configured to: if the value of the first information is the same as the value of the second information, determine that no key BSS parameters corresponding to APs of the first AP MLD change; and/or if the value of the first information is different from the value of the second information, determine that the key BSS parameter corresponding to the at least one AP of the first AP MLD changes.

With reference to the fourth aspect, in some implementations of the fourth aspect, the value of the first information is different from the value of the second information, and the apparatus further includes: a first transceiver unit, configured to receive a beacon frame, where the beacon frame includes a key BSS parameter corresponding to an AP associated with the second STA, and the second STA is a station that is in the apparatus and that is associated with the first AP MLD.

With reference to the fourth aspect, in some implementations of the fourth aspect, the value of the first information is different from the value of the second information, and the transceiver unit is further configured to: send a first frame, where the first frame is for requesting a key BSS parameter corresponding to an AP associated with the second STA, and the second STAis a station that is in the apparatus and that is associated with the first AP MLD; and receive a second frame, where the second frame includes the key BSS parameter corresponding to the AP associated with the second STA.

With reference to the fourth aspect, in some implementations of the fourth aspect, the second STA is all STAs of the apparatus.

With reference to the fourth aspect, in some implementations of the fourth aspect, the first information is carried in a check beacon field.

With reference to the fourth aspect, in some implementations of the fourth aspect, the check beacon field is carried in a traffic indication map TIM frame.

With reference to the fourth aspect, in some implementations of the fourth aspect, the key BSS parameter includes one or more of the following: inclusion of a channel switch announcement element, inclusion of an extended channel switch announcement element, modification of the EDCA parameters element, inclusion of a quiet element, modification of the DSSS parameter set, modification of the CF parameter set element, modification of the HT operation element, inclusion of a wide bandwidth channel switch element, inclusion of a channel switch wrapper element, inclusion of an operating mode notification element, inclusion of a quiet channel element, modification of the VHT operation element, modification of the HE operation element, insertion of a broadcast TWT element, inclusion of the BSS color change announcement element, modification of the multi-user EDCA parameter set element, modification of the spatial reuse parameter set element, and modification of the extremely high throughput operation element.

According to a fifth aspect, a communication apparatus is provided, and includes a processor. The processor is coupled to a memory, and may be configured to execute instructions in the memory, to implement the method according to the first aspect or any one of the possible implementations of the first aspect, or the method according to the second aspect or any one of the possible implementations of the second aspect. Optionally, the apparatus further includes the memory. Optionally, the apparatus further includes a communication interface, and the processor is coupled to the communication interface.

In an implementation, the apparatus is a first AP MLD. When the apparatus is the first AP MLD, the communication interface may be a transceiver or an input/output interface.

In another implementation, the apparatus is a chip disposed in a first AP MLD. When the apparatus is the chip disposed in the first AP MLD, the communication interface may be an input/output interface.

In an implementation, the apparatus is a first STAMLD. When the apparatus is the first STA MLD, the communication interface may be a transceiver or an input/output interface.

In another implementation, the apparatus is a chip disposed in a first STA MLD. When the apparatus is the chip disposed in the first STA MLD, the communication interface may be an input/output interface.

In another implementation, the apparatus is a chip or a chip system.

Optionally, the transceiver may be a transceiver circuit. Optionally, the input/output interface may be an input/output circuit.

According to a sixth aspect, a computer-readable storage medium is provided. The computer-readable storage medium stores a computer program. When the computer program is executed by an apparatus, the apparatus is enabled to implement the method according to the first aspect or any one of the possible implementations of the first aspect, or the method according to the second aspect or any one of the possible implementations of the second aspect.

According to a seventh aspect, a computer program product including instructions is provided. When the instructions are executed by a computer, an apparatus is enabled to implement the method according to the first aspect or any one of the possible implementations of the first aspect, or the method according to the second aspect or any one of the possible implementations of the second aspect.

According to an eighth aspect, a communication system is provided, including the first AP MLD and the first STA MLD described above.

### BRIEF DESCRIPTION OF DRAWINGS

FIG. 1 is a diagram of a structure of an AP MLD and a STAMLD according to an embodiment of this application;
FIG. 2(a) to FIG. 2(c) are diagrams of structures of communication systems according to embodiments of this application;
FIG. 3 is a diagram of a frame structure of a TIM frame according to an embodiment of this application;
FIG. 4 is a diagram of a frame structure of a TIM frame according to an embodiment of this application;
FIG. 5 is a diagram of a frame structure of a TIM frame according to an embodiment of this application;
FIG. 6 is a diagram of a communication method according to an embodiment of this application;
FIG. 7 is a block diagram of a communication apparatus according to an embodiment of this application; and
FIG. 8 is a block diagram of a communication device according to an embodiment of this application.

### DESCRIPTION OF EMBODIMENTS

The following describes technical solutions of this application with reference to accompanying drawings.

The following first describes related concepts in embodiments of this application, to better understand embodiments of this application.

### 1. Multi-link device

A wireless communication system to which embodiments of this application are applicable may be a wireless local area network (wireless local area network, WLAN) or a cellular network. A communication method may be implemented by a communication device in the wireless communication system or a chip or a processor in the communication device. The communication device may be a wireless communication device that supports concurrent transmission over a plurality of links. For example, the communication device is referred to as a multi-link device (Multi-link device) or a multi-band device (multi-band device). Compared with a device that supports only single-link transmission, the multi-link device has higher transmission efficiency and a higher throughput.

The multi-link device includes one or more affiliated stations STAs affiliated STAs). The affiliated STA is a logical station and may operate on one link. The affiliated station may be an access point (Access Point, AP) or a non-access point station (non-Access Point Station, non-AP STA). For ease of description, in this application, a multi-link device whose affiliated station is an AP may be referred to as a multi-link AP, a multi-link AP device, or an AP multi-link device (AP multi-link device, AP MLD). A multi-link device whose affiliated station is a non-AP STA may be referred to as a multi-link STA, a multi-link STA device, or a STA multi-link device (STA multi-link device, STAMLD). For ease of description, that "the multi-link device includes an affiliated STA" is also briefly described as that "the multi-link device includes a STA" in embodiments of this application.

It should be noted that the multi-link device includes a plurality of logical stations, and each logical station operates on one link, but the plurality of logical stations are allowed to operate on a same link.

The multi-link device may implement wireless communication according to 802.11 series protocols. For example, a station complying with an extremely high throughput (extremely high throughput, EHT), or a station complying with 802.11be or compatible with 802.11be implements communication with another device. Certainly, the another device may be a multi-link device, or may not be a multi-link device.

For example, the multi-link device in embodiments of this application may be a single-antenna device, or may be a multi-antenna device. For example, the multi-link device may be a device with more than two antennas. A quantity of antennas included in the multi-link device is not limited in embodiments of this application. In embodiments of this application, the multi-link device may allow services of a same access type to be transmitted over different links, and even allow a same data packet to be transmitted over different links; or may not allow services of a same access type to be transmitted over different links, but allow services of different access types to be transmitted over different links.

For example, a multi-link device is an apparatus with a wireless communication function, and the apparatus may be a whole device, or may be a chip, a processing system, or the like installed in the whole device, and a device in which the chip or the processing system is installed may implement methods and functions in embodiments of this application under control of the chip or the processing system. For example, the STA MLD in embodiments of this application has a wireless transceiver function, may support 802.11 series protocols, and may communicate with an AP MLD, another STA MLD, or a single-link device. For example, the STA MLD is any user communication device that allows a user to communicate with an AP and further communicate with a WLAN. For example, the STAMLD may be user equipment capable of accessing an internet, for example, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone, an internet of things node in an internet of things, a vehicle-mounted communication apparatus in an internet of vehicles, or the like. The STAMLD may alternatively be a chip and a processing system in these terminals.

In embodiments of this application, the AP MLD is an apparatus that provides a service for the STA MLD, and may support 802.11 series protocols. For example, the AP MLD may be a communication entity such as a communication server, a router, a switch, and a network bridge, or the AP MLD may include a macro base station, a micro base station, a relay node, and the like of various forms. Certainly, the AP MLD may alternatively be a chip and a processing system in these devices of various forms, thereby implementing the methods and functions in embodiments of this application. In addition, the multi-link device can support high-rate and low-latency transmission. With continuous evolution of application scenarios of wireless local area networks, the multi-link device is alternatively applied to more scenarios, for example, a sensor node (for example, a smart water meter, a smart electricity meter, and a smart air detection node) in a smart city, a smart device (for example, a smart camera, a projector, a display, a television, a speaker, a refrigerator, and a washing machine) in a smart home, a node in an internet of things, an entertainment terminal (for example, a wearable device such as an AR device and a VR device), a smart device (for example, a printer or a projector) in a smart office, an internet of vehicles device in an internet of vehicles, and some infrastructures (for example, a vending machine, a self-service navigation console in a supermarket, a self-service cash register, and a self-service ordering machine) in a daily life scenario. Specific forms of the STA MLD and the AP MLD are not specifically limited in embodiments of this application, and are merely described as an example herein. The 802.11 protocol may be a protocol that supports 802.11be or is compatible with 802.11be.

Frequency bands in which the multi-link device operates may include but are not limited to sub-1 GHz, 2.4 GHz, 5 GHz, 6 GHz, and a high-frequency 60 GHz.

For example, the multi-link device in embodiments of this application may be a single-antenna device, or may be a multi-antenna device. For example, the multi-link device in embodiments of this application may be a device with two or more antennas. A quantity of antennas included in the multi-link device is not limited in embodiments of this application.

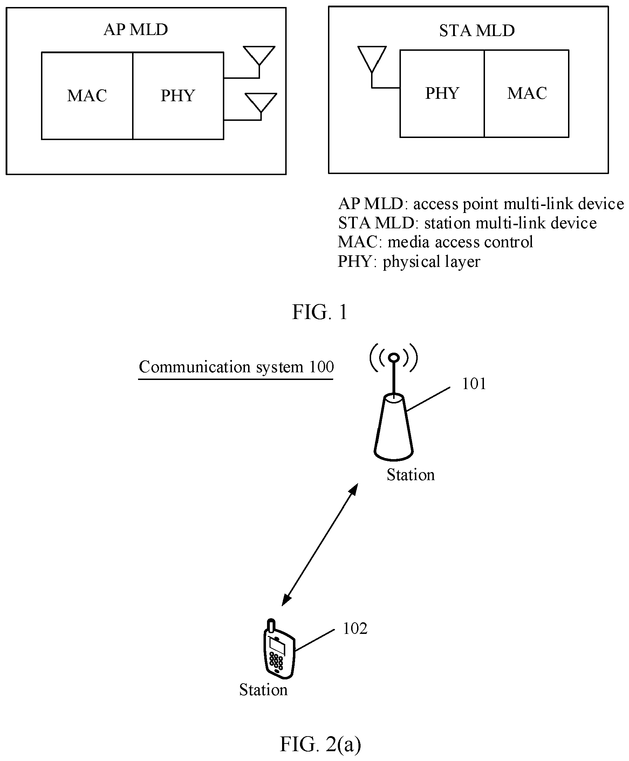

FIG. 1 is a diagram of a structure of an AP MLD and a STAMLD according to an embodiment of this application. FIG. 1 is a diagram of a structure in which the AP MLD has a plurality of antennas and the STA MLD has a single antenna. A physical layer (Physical layer, PHY) part and a media access control (Media Access Control, MAC) layer part in the AP MLD and the STAMLD are focused in the 802.11 standard.

### 2. Link identifier

The link identifier represents one station operating on one link. In other words, if there is more than one station on one link, more than one link identifier represents the stations. A link mentioned below sometimes also represents a station operating on the link.

During data transmission between an AP MLD and a STAMLD, a link identifier may be used to identify one link or a station on one link. Before communication, the AP MLD and the STA MLD may first negotiate or communicate a correspondence between a link identifier and a link or a station on a link, or an AP of the AP MLD broadcasts a correspondence between a link identifier and a link or a station on a link. Therefore, during data transmission, a link identifier is carried without transmitting a large amount of signaling information to indicate a link or a station on a link. This reduces signaling overheads and improves transmission efficiency.

In an example, a management frame, such as a beacon (beacon) frame, sent by the AP MLD when establishing a basic service set (basic service set, BSS) carries an element, and the element includes a plurality of link identifier information fields. The link identifier information field may indicate a correspondence between a link identifier and a station operating on a link corresponding to the link identifier. The link identifier information field includes not only the link identifier, but also one or more of the following information: a media access control (Media Access Control, MAC) address, an operation set, and a channel number. One or more of the MAC address, the operation set, and the channel number may indicate one link. For an AP, a MAC address of the AP is also a BSSID (basic service set identifier, basic service set identifier) of the AP. In another example, in a multi-link device association process, the AP MLD and the STA multi-link device negotiate a plurality of link identifier information fields. An association of multi-link devices means that one AP of the AP MLD is associated with one STA of the STA MLD. The association may be performed to help respectively associate a plurality of STAs of the STA MLD with a plurality of APs of the AP MLD. One STA is associated with one AP.

In subsequent communication, the AP MLD or the STA multi-link device represents a station/AP of the STA multi-link device by using a link identifier. The link identifier may further represent one or more attributes of a MAC address of an AP operating on a link, an operation set, and a channel number. For example, the link identifier represents <the operation set, the channel number, the MAC address of the AP>, where the MAC address of the AP is equivalent to a BSSID (basic service set identifier, basic service set identifier) of the AP.

The technical solutions provided in this application are applicable to a WLAN scenario, for example, applicable to an IEEE 802.11 system standard, for example, a system that supports a next-generation Wi-Fi protocol of IEEE 802.11ax, and a wireless local area network system that supports 802.11 series protocols such as 802.11be, Wi-Fi 7, or EHT, or for another example, a next generation of 802.11be, that is, Wi-Fi 8, or may be applied to an ultra wideband UWB-based wireless personal area network system or a sensing sensing system.

Although embodiments of this application are mainly described by using an example in which an IEEE 802.11 network is deployed, a person skilled in the art easily understand that various aspects in this application may be extended to other networks that use various standards or protocols, for example, Bluetooth (Bluetooth), a high-performance radio LAN (high performance radio LAN, HIPERLAN) (which is a wireless standard similar to the IEEE 802.11 standard, and is mainly used in Europe), a wide area network (WAN), a personal area network (personal area network, PAN), or other networks known or developed in future. Therefore, regardless of used coverage and a used wireless access protocol, various aspects provided in this application are applicable to any appropriate wireless network.

### 3. Basic service set (BSS)

The BSS is used to describe a group of devices that can communicate with each other in a WLAN. The WLAN may include a plurality of BSSs. Each BSS has a unique identifier, which is referred to as a basic service set identifier (BSSID).

One BSS may include a plurality of stations (station, STA). The station may be an AP or a non-AP STA. Optionally, one BSS may include one AP and a plurality of non-AP STAs associated with the AP.

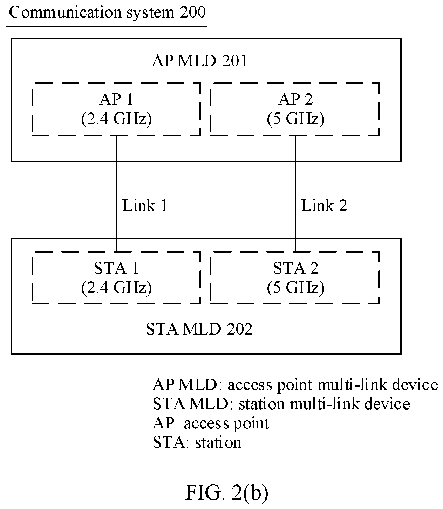

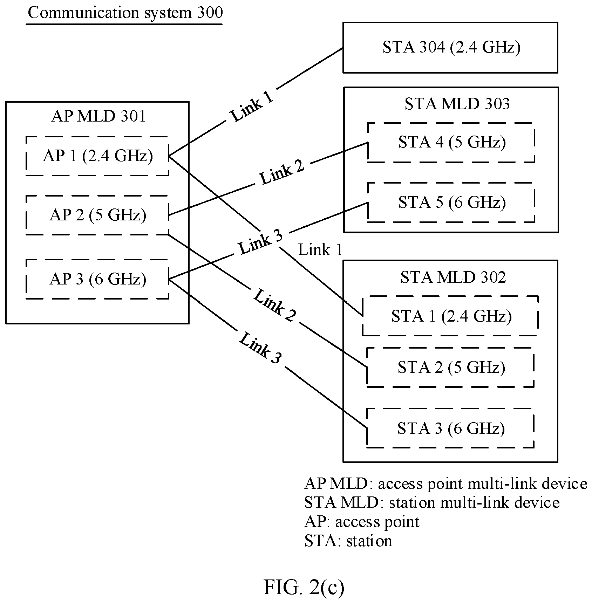

FIG. 2(a) to FIG. 2(c) are diagrams of structures of communication systems according to embodiments of this application; FIG. 2(a) describes, by using a wireless local area network as an example, a communication system 100 to which an embodiment of this application is applied. FIG. 2(b) and FIG. 2(c) are respectively diagrams of structures of a communication system 200 and a communication system 300 by using an example in which a multi-link device in a wireless local area network communicates with another device over a plurality of links.

As shown in FIG. 2(a), the communication system 100 includes a station 101 and a station 102. The station 101 and the station 102 may communicate over a plurality of links, to achieve effect of improving a throughput. The station 101 may be a multi-link device, and the station 102 may be a single-link device, a multi-link device, or the like. In a scenario, the station 101 is an AP MLD, and the station 102 is a STAMLD or a station (for example, a single-link station). In another scenario, the station 101 is a STA MLD, and the station 102 is an AP (for example, a single-link AP) or an AP MLD. In still another scenario, the station 101 is an AP MLD, and the station 102 is an AP MLD or an AP. In yet another scenario, the station 101 is a STA MLD, and the station 102 is a STA MLD or a STA (for example, a single-link station). Certainly, the wireless local area network may further include other devices. A quantity of devices and types of the devices illustrated in FIG. 2(a) are merely examples.

As shown in FIG. 2(b), the communication system 200 includes an AP MLD 201 and a STA MLD 202. The AP MLD 201 includes an affiliated AP 1 and an affiliated AP 2, the STA MLD 202 includes an affiliated STA 1 and an affiliated STA 2, and the AP MLD 2021 and the STA MLD 202 communicate in parallel over a link 1 and a link 2.

As shown in FIG. 2(c), the communication system 300 includes an AP MLD 301, a STAMLD 302, a STA MLD 303, and a STA 304. FIG. 2(c) shows a scenario in which the AP MLD 301 communicates with the STA MLD 302, the STA MLD 303, and the STA 304. The AP MLD 301 includes an affiliated AP 1, an affiliated AP 2, and an affiliated AP 3. The STA MLD 302 includes three affiliated stations: a STA 1, a STA2, and a STA3. The STAMLD 303 includes two affiliated stations: a STA 4 and a STA 5. The STA 304 is a single-link device. The AP MLD 301 may separately communicate with the STA MLD 302 over a link 1, a link 2, and a link 3, communicate with the STA MLD 303 over the link 2 and the link 3, and communicate with the STA 304 over the link 1. In an example, the STA 304 operates in a 2.4 GHz frequency band; in the STA MLD 303, the STA 4 operates in a 5 GHz frequency band, and the STA 5 operates in a 6 GHz frequency band; and in the STA MLD 302, the STA 1 operates in the 2.4 GHz frequency band, the STA 2 operates in the 5 GHz frequency band, and the STA 3 operates in the 6 GHz frequency band. The AP 1 that operates in the 2.4 GHz frequency band and that is in the AP MLD 301 may perform, over the link 1, uplink or downlink data transmission with the STA 304 and the STA 1 in the STA MLD 302. The AP 2 that operates in the 5 GHz frequency band and that is in the AP MLD 301 may perform, over the link 2, uplink or downlink data transmission with the STA 4 that operates in the 5 GHz frequency band and that is in the STA MLD 303, and may further perform, over the link 2, uplink or downlink data transmission with the STA 2 that operates in the 5 GHz frequency band and that is in the STA MLD 302. The AP 3 that operates in the 6 GHz frequency band and that is in the AP MLD 301 may perform, over the link 3, uplink or downlink data transmission with the STA 3 that operates in the 6 GHz frequency band and that is in the STA MLD 302, and may further perform, over the link 3, uplink or downlink data transmission with the STA 5 in the STA MLD.

It should be noted that FIG. 2(b) only shows that the AP MLD supports two frequency bands. FIG. 2(c) shows only an example in which the AP MLD 301 supports three frequency bands (2.4 GHz, 5 GHz, and 6 GHz), each frequency band corresponds to one link, and the AP MLD 301 may operate in one or more links of the link 1, the link 2, or the link 3. On the AP side or the STA side, the link herein may be further understood as a station operating on the link. In an actual application, the AP MLD and the STA MLD may further support more or fewer frequency bands. In other words, the AP MLD and the STA MLD may operate on more or fewer links. This is not limited in this embodiment of this application.

In the 802.11 protocol, a STA includes two operating modes: a non-power-saving mode and a power-saving mode. When the STA operates in the non-power-saving mode, the STA is always in an awake state, that is, an active mode (active mode), regardless of whether data is transmitted on the STA. When the STA operates in the power-saving mode, the STA may be in an awake state (awake state) when data is transmitted between the STA and an AP. When there is no data transmission between the STA and the AP, the STA may be in a doze state (doze state) to reduce power consumption. The STA may send a frame to the AP to indicate whether the STA is in the power-saving mode. For example, when a power-saving bit in a frame control field (frame control field) in a MAC header of the frame is set to 1, it indicates to the AP that the STA is in the power-saving mode, and when the power-saving bit in the frame control field (frame control field) in the MAC header of the frame is set to 0, it indicates to the AP that the STA is in the non-power-saving mode.

It can be understood that "data transmission" and "transmit data" mentioned in this application generally refer to communication, where "data" generally refers to communication information, and is not limited to data information, but may alternatively be signaling information or the like.

The STA may communicate with the AP for about an awake period based on a wireless network management (wireless network management, WNM) power-saving mechanism. The AP sends a broadcast traffic indication map (traffic indication map, TIM) frame to a plurality of corresponding STAs at the beginning of each awake period. The TIM frame is far shorter than a beacon (Beacon) frame. A TIM element included in the TIM frame notifies the plurality of STAs of whether there is a corresponding downlink traffic indication. Because the TIM frame is much shorter than the beacon frame, the STA may obtain power-saving effect. In the WNM power-saving mechanism, a TIM broadcast interval (TIM broadcast Interval) field in a TIM broadcast request (broadcast request) frame sent by the STA or a TIM broadcast response (broadcast response) frame returned by the AP indicates the awake period. A TIM broadcast interval is usually set to be greater than a beacon frame interval. After the awake period is negotiated, a station that supports TIM broadcast only needs to receive a TIM frame in an awake period, and may not periodically receive a beacon frame.

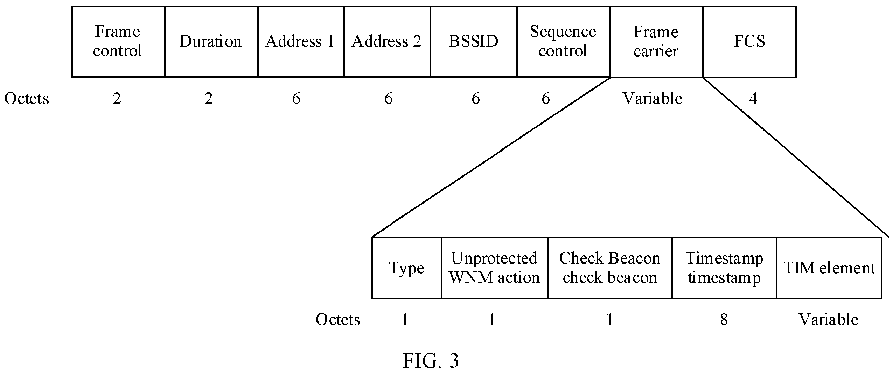

FIG. 3 is a diagram of a frame structure of a TIM frame according to an embodiment of this application. The TIM frame shown in FIG. 3 is applicable to a non-multi-link station.

As shown in FIG. 3, a frame carrier in the TIM frame may include at least one of the following: a type field, an unprotected wireless network management (wireless network management, WNM) action field, a check beacon field, a timestamp field, a TIM element, and the like. The timestamp field indicates clock information, the check beacon (check beacon) field indicates whether a key BSS parameter is updated in a BSS in which the station is located, and the TIM element notifies the station of whether there is a downlink unicast/multicast service.

For example, if a key BSS parameter in a BSS in which an AP is located is updated, a value of the check beacon field is increased, for example, increased by 1. For example, when determining that a key BSS parameter is updated in the BSS, the AP increases the value of the check beacon field by 1, where an initial value of the check beacon field is 0. The STA records a value of a received check beacon field each time. If a value of a check beacon field in a recently received service is different from a value of a check beacon field received last time, the STA receives a beacon frame sent by the AP.

FIG. 3 shows the TIM frame applicable to a single-link station. In this solution, a TIM broadcast mechanism of a multi-link device is not considered. As a result, one station of a station multi-link device cannot obtain information about whether key BSS parameters corresponding to a plurality of APs of an AP multi-link device are updated or key BSS parameters in a plurality of BSSs managed by the plurality of APs are updated.

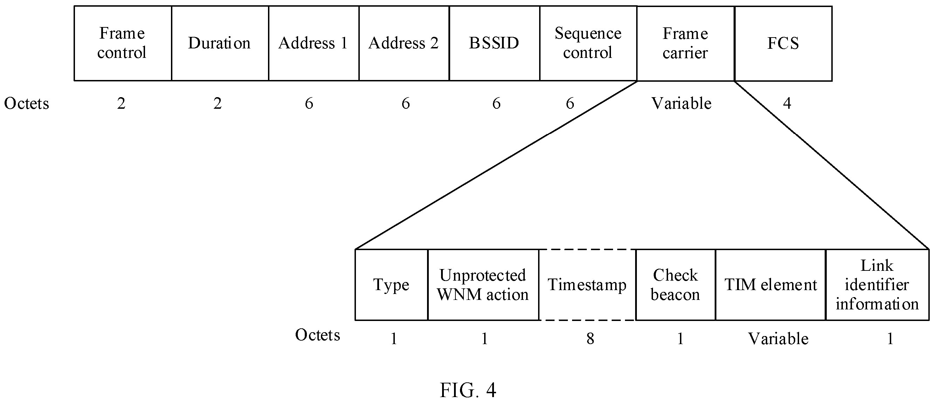

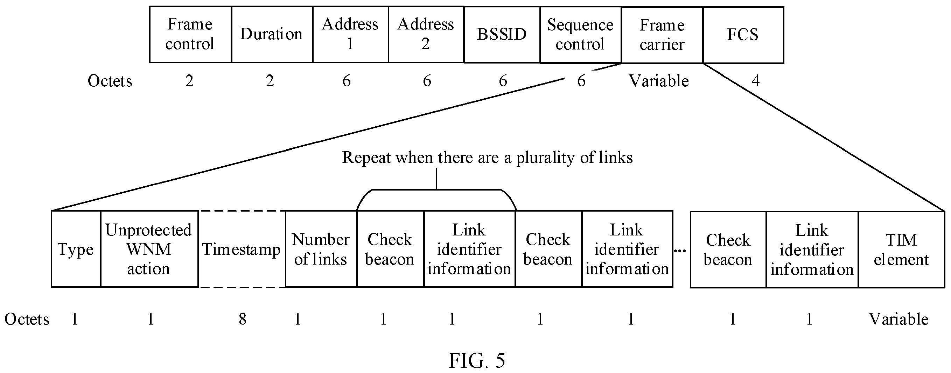

FIG. 4 and FIG. 5 show TIM frames in a multi-link device communication scenario. For a multi-link device, the TIM frame may also be referred to as a multi-link TIM frame, and the multi-link TIM frame also includes an unprotected WNM action field. An action value of the unprotected WNM action field is shown in Table 1.

**Table 1**

| Action value | Meaning |
|---|---|
| 0 | Traffic indication map (TIM) |
| 1 | Time measurement (Time measurement) |
| 2 to 255 | Reserved (Reserved) |

For example, as shown in Table 1, the action value is set to one of the reserved values, for example, 2, to indicate that the TIM frame is a multi-link TIM frame, to distinguish the multi-link TIM frame from the conventional TIM frame shown in FIG. 3. A specific value of the reserved value of the unprotected WNM action field is not limited in this embodiment of this application. For example, the value may alternatively be another value from 2 to 255. The value of 2 is merely an example for description herein.

FIG. 4 is a diagram of a frame structure of a TIM frame according to an embodiment of this application. The TIM frame shown in FIG. 4 is applicable to a multi-link communication scenario. As shown in FIG. 4, a frame carrier includes a type field, an unprotected WNM action field, a check beacon field, a TIM element field, and a link identifier information field. Optionally, the frame carrier may further include a timestamp field. The check beacon field of the multi-link TIM frame shown in FIG. 4 indicates whether a key BSS parameter on a link indicated by the link identifier information field is updated, and the TIM element indicates whether a station multi-link device/station has downlink unicast/multicast service information.

FIG. 5 is a diagram of a frame structure of a TIM frame according to an embodiment of this application. The TIM frame shown in FIG. 5 is applicable to a multi-link communication scenario. As shown in FIG. 5, in addition to type and unprotected WNM action fields, a frame carrier further includes a number of links field. When the number of links field indicates a plurality of links, a check beacon field, a TIM element field, and a link identifier information field are further included for each link. Optionally, the frame carrier may further include one or more timestamp fields. In the multi-link TIM frame shown in FIG. 5, each check beacon field corresponds to one link identifier information field, and indicates whether there is key BSS parameter update information on a link of the link identifier information field.

For example, for the multi-link TIM frame shown in FIG. 4 or FIG. 5, if a key BSS parameter of a BSS in which the link indicated by the link identifier information field is located is updated, or a key parameter of the link indicated by the link identifier information field is updated, a value of the check beacon field is increased, for example, increased by 1. For example, when determining that the key BSS parameter of the BSS on the link is updated, the first AP increases the value of the check beacon field corresponding to the link by 1. The BSS parameter may also be understood as a link parameter.

For example, each time the multi-link STA records received values of check beacon fields corresponding to links. If a value of a check beacon field corresponding to a link in a recently received service is different from a value that is of a check beacon field corresponding to the link and that is received last time, the multi-link STA receives, on the link, a beacon frame sent from a multi-link AP.

Although the multi-link device is taken into account in the solutions in FIG. 4 and FIG. 5, because a new multi-link TIM frame is proposed, a non-multi-link station cannot receive the multi-link TIM frame, that is, a compatibility problem exists. The AP needs to send two types of frames to support both a multi-link device and a non-multi-link station: the TIM frame shown in FIG. 3, and the multi-link TIM frame shown in FIG. 4 or FIG. 5.

In conclusion, for a station multi-link device, if one station supports a TIM broadcast feature while other stations are in a doze state, the station may receive a TIM frame within a specified time interval, to obtain update information of a key BSS parameter corresponding to an AP associated with the station. However, the station cannot obtain update information of key BSS parameters corresponding to APs associated with other stations of the multi-link device.

Consequently, the station multi-link device or the station cannot normally communicate with these APs.

In view of this, embodiments of this application provide a communication method, to help improve communication reliability.

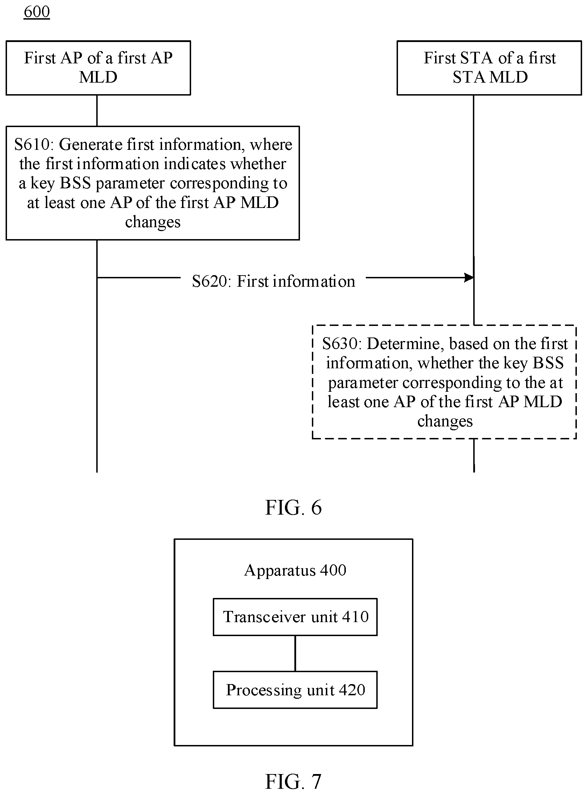

FIG. 6 is a diagram of a communication method according to an embodiment of this application. As shown in FIG. 6, the method 600 includes the following steps.

S610: A first AP of a first AP MLD generates first information, where the first information indicates whether a key BSS parameter corresponding to at least one AP of the first AP MLD changes.

It should be understood that the WLAN may include a plurality of BSSs, and each BSS may include one AP and a plurality of STAs associated with the AP, that is, each AP corresponds to one BSS. The key BSS parameter is an important parameter used to describe the BSS. Therefore, there is also a one-to-one correspondence between the AP and the key BSS parameter. The "key BSS parameter corresponding to the AP" may also be understood as a key BSS parameter of a BSS in which the AP is located, or a key BSS parameter of the AP. In a multi-link communication scenario, the "key BSS parameter corresponding to the AP" may also be understood as a key BSS parameter of a BSS in which a link corresponding to the AP is located.

The first information indicates whether the key BSS parameter corresponding to the at least one AP of the first AP MLD changes. In other words, the first information indicates whether a key BSS parameter corresponding to any AP of the first AP MLD changes, whether key BSS parameters corresponding to all APs of the first AP MLD change, or whether a key BSS parameter corresponding to each of all the APs of the first AP MLD changes.

There may be one or more APs whose key BSS parameters in the first AP MLD change. There may be one or more key BSS parameter change events in one AP.

It should be understood that the first information may indicate only whether a key BSS parameter of an AP changes in the first AP MLD, but does not indicate which APs whose key BSS parameters change in the first AP MLD.

In addition, the first AP of the first AP MLD generates the first information, where the first information indicates whether the key BSS parameter corresponding to the at least one AP of the first AP MLD changes. It may be understood that when the key BSS parameter corresponding to the at least one AP of the first AP MLD changes, the first AP generates the first information, and the first information indicates that the key BSS parameter corresponding to the at least one AP of the first AP MLD changes. Alternatively, when no key BSS parameters corresponding to APs of the first AP change, the first AP generates the first information, where the first information indicates that no key BSS parameters corresponding to APs of the first AP MLD change.

The key BSS parameter changes, in other words, the key BSS parameter is updated, or the key BSS parameter updates.

Optionally, the AP whose key BSS parameter changes may be the first AP, any AP other than the first AP of the first AP MLD, or a plurality of APs of the first AP MLD. The plurality of APs may include the first AP, or may not include the first AP.

The key BSS parameter change event may be used to identify whether a key BSS parameter changes. If the key BSS parameter changes, it may be understood that the key BSS parameter change event exists in the beacon frame.

In an implementation, the key BSS parameter change event includes at least one of the following: inclusion of a channel switch announcement element (Inclusion of a Channel Switch Announcement element), inclusion of an extended channel switch announcement element (Inclusion of an Extended Channel Switch Announcement element), modification of the enhanced distributed channel access (enhanced distribution channel access, EDCA) parameters element (Modification of the EDCA parameters element), inclusion of a quiet element (Inclusion of a Quiet element), modification of the direct sequence spread spectrum (direct sequence spread spectrum, DSSS) parameter set (Modification of the DSSS Parameter Set), modification of the contention free (contention free, CF) parameter set element (Modification of the CF Parameter Set element), modification of the high throughput (high throughput, HT) operation element (Modification of the HT Operation element), inclusion of a wide bandwidth channel switch element (Inclusion of a Wide Bandwidth Channel Switch element), inclusion of a channel switch wrapper element (Inclusion of a Channel Switch Wrapper element), inclusion of an operating mode notification element (Inclusion of an Operating Mode Notification element), inclusion of a quiet channel element (Inclusion of a Quiet Channel element), modification of the VHT (very high throughput) operation element (Modification of the VHT Operation element), modification of the HE (high efficient) operation element (Modification of the HE Operation element), insertion of a broadcast target wake up time (target wake up time, TWT) element (Insertion of a Broadcast TWT element), inclusion of the BSS color change announcement element (Inclusion of the BSS Color Change Announcement element), modification of the multi-user (multi-user, MU) EDCA parameter set element (Modification of the MU EDCA Parameter Set element), modification of the spatial reuse parameter set element (Modification of the Spatial Reuse Parameter Set element), and modification of the EHT (extremely high throughput) operation element (Modification of the EHT Operation element).

It should be understood that, for the AP MLD, any AP may obtain whether values of key BSS parameters of all the APs affiliated to the AP MLD change.

The first AP is an AP that establishes a TIM broadcast service with at least one station associated with the first AP. Optionally, the station is affiliated to a station MLD.

S620: The first AP sends the first information to a first STA of a first STA MLD, and correspondingly, the first STA of the first STA MLD receives the first information.

The first STA MLD and the first AP MLD are communication devices in the multi-link communication scenario, the first AP is any AP affiliated to the first AP MLD, the first SAT is a STA affiliated to the first STA MLD, and the first STA is associated with the first AP, that is, there is a communication link between the first AP and the first STA.

Optionally, the first AP sends the first information to the first STA of the first STA MLD, that is, the first AP sends the first information over a link on which the first AP operates.

Optionally, the first STA of the first STA MLD receives the first information, that is, the first STA receives the first information over a link on which the first STA operates.

The first station is a station that establishes a TIM broadcast service with an AP associated with the first station. Optionally, the AP is affiliated to the AP MLD.

According to this embodiment, the first AP may indicate, to the first STA MLD based on the first information, whether the key BSS parameter corresponding to the at least one AP of the first AP MLD changes. Further, the first STA may determine, based on the first information, whether to obtain a key BSS parameter of an AP of the first AP MLD. In this way, when the key BSS parameter corresponding to the at least one AP of the first AP MLD changes, the first STA can learn in time, so that the first STAMLD and the first AP MLD can communicate normally, thereby helping improve communication reliability.

Optionally, the method further includes: S630: The first STA determines, based on the first information, whether the key BSS parameter corresponding to the at least one AP of the first AP MLD changes.

Specifically, the first information may be an explicit indication, that is, the first STA may obtain, after parsing the first information, whether the key BSS parameter corresponding to the at least one AP of the first AP MLD changes.

For example, the first information is a count value. For example, if a key BSS parameter corresponding to one or more APs of the first AP MLD changes, a value of the first information is increased. If no key BSS parameters corresponding to the APs of the first AP MLD change, the value of the first information remains unchanged.

Specifically, the first information may alternatively be an implicit indication, that is, the first STA may further obtain, after parsing the first information and according to internal determining logic, whether the key BSS parameter corresponding to the at least one AP of the first AP MLD changes.

For example, the first information is a bit value. For example, one bit reserved in an unprotected WNM action field may be used as the first information. When a value of the one bit is 1, it indicates that the key BSS parameter corresponding to the one or more APs of the first AP MLD changes. When the value of the one bit is 0, it indicates that no key BSS parameters corresponding to the APs of the first AP MLD change.

Optionally, the first STA may determine, based on the first information, whether to obtain a key BSS parameter of an AP of the first AP MLD. For example, if the key BSS parameter corresponding to the at least one AP of the first AP MLD changes, the changed key BSS parameter of the AP is obtained.

Optionally, in a possible implementation, the first information is the count value.

If the key BSS parameter corresponding to the at least one AP of the first AP MLD changes, the value of the first information is increased.

It should be understood that before S630, the first AP may send second information to the first STA of the first STA MLD. Correspondingly, the first STA of the first STA MLD receives the second information, where the second information is information that is sent by the first AP before the first information is sent and that indicates whether the key BSS parameter corresponding to the at least one AP of the first AP MLD changes. That the value of the first information is increased may be understood as that the value of the first information is increased compared with a value of the second information. That the value of the first information is not increased may be understood as that the value of the first information is equal to the value of the second information, or the value of the first information remains unchanged compared with a value of fifth information.

For example, the value of the second information is 0. Before the first information is sent, if a key BSS parameter corresponding to one AP of the first AP MLD changes, the value of the first information is 1.

For example, the value of the second information is 0. Before the first information is sent, if a plurality of key BSS parameters corresponding to one AP of the first AP MLD change, the value of the first information is 1.

For another example, the value of the second information is 0. Before the first information is sent, if key BSS parameters corresponding to a plurality of APs of the first AP MLD change, regardless of a specific quantity of the plurality of APs or a quantity of key BSS parameters of one AP that change, the value of the first information is increased by 1.

If no key BSS parameters corresponding to the APs of the first AP MLD change, the value of the first information remains unchanged.

Similarly, that the value of the first information remains unchanged may be understood as that the value of the first information remains unchanged compared with the value of the second information.

Optionally, the method 600 further includes: The first STA records (maintains) the first information.

It should be understood that "record" may also be referred to as save, maintain, and store.

In other words, the first STA records the value of the received first information.

In an example, when the value of the first information changes, the first STA records the value of the first information. In other words, the first STA determines, based on whether the value of the first information changes, whether to update the value of the first information.

In still another example, after the first STA receives the first information, regardless of whether the value of the first information is the same as a previously recorded value, the first STA records the currently received first information, and discards the previously recorded value.

Optionally, information recorded before the first STA records the first information is referred to as second information, and the second information is information that is received before the first information is received and that indicates whether the key BSS parameter corresponding to the at least one AP of the first AP MLD changes.

After receiving the first information, the first STA may compare the first information with the first information, to determine, based on whether a value of the first information is the same as a value of the second information, whether the key BSS parameter corresponding to the at least one AP of the first AP MLD changes.

In an example, if the value of the first information is different from the value of the second information, the first STA determines that the key BSS parameter corresponding to the at least one AP of the first AP MLD changes.

In this case, the first STA MLD may further obtain, in either of the following two manners, a key BSS parameter corresponding to an AP associated with a second STA, where the second STA is a station that establishes an association with the first AP MLD and that is in the first STAMLD.

Optionally, the second STA is all stations that are associated with the first AP MLD and that are in the first STAMLD.

For example, it is assumed that the first STA MLD includes three affiliated STAs, which are denoted as a STA#1, a STA#2, and a STA#3. The STA#1, the STA#2, and the STA#3 are stations associated with the first AP MLD. In this case, the second STAs are the STA #1, the STA #2, and the STA #3.

Manner 1: The second STAs of the first STA MLD receive a beacon (beacon) frame, where the beacon frame includes key BSS parameters corresponding to APs associated with the second STAs.

It should be understood that the first information received by the first STA triggers the second STA to receive the beacon (beacon) frame, where the triggering may also be referred to as enabling or causing.

It should be further understood that the triggering may be understood as information exchange between the first STA and the second STAs. For example, if the second STAs are in a doze state, the second STAs may change to an awake state, so that the second STAs can also obtain, from the first STA, information indicating that a key BSS parameter corresponding to at least one AP of the first AP MLD changes. The triggering may also be understood as an internal processing process of the first STA MLD. For the first STA MLD, if the first STA determines that the key BSS parameter corresponding to the at least one AP of the first AP MLD changes, all STAs of the first STAMLD obtain information indicating that respective key BSS parameters corresponding to APs that are associated with the STAs and that are in the first AP MLD change.

In other words, if the first STA determines that the key BSS parameter corresponding to the at least one AP of the first AP MLD changes, all the second STAs of the first STA MLD receive the beacon frame.

Based on this solution, if the first STA determines that the key BSS parameter corresponding to the at least one AP of the first AP MLD changes, both the first STA and the second STAs can receive the beacon frame, to obtain the key BSS parameters of the APs associated with the STAs. In this way, the second STAs of the first STA MLD can also obtain the key BSS parameters of BSSs in which the second STAs are located, thereby helping improve communication reliability of the second STAs.

Manner 2: The first STA sends a first frame to the first AP, where the first frame is for requesting key BSS parameters corresponding to APs associated with the second STAs. Further, after receiving the first frame, the first AP may send a second frame to the first STA, where the second frame includes the key BSS parameters corresponding to the APs associated with the second STAs.

Specifically, it is assumed that the second STAs include a STA #1 and a STA #2, an AP associated with the STA #1 is denoted as an AP #1, and an AP associated with the STA #2 is denoted as an AP #2. In this case, the APs associated with the second STAs herein are the AP #1 and the AP #2. If the STA #1 determines that the key BSS parameter corresponding to the at least one AP of the first AP MLD changes, the STA#1 may send a multi-link probe request frame, where the multi-link probe request frame is for requesting a key BSS parameter corresponding to the AP #1 and a key BSS parameter corresponding to the AP #2.

In other words, if the first STA determines that the key BSS parameter corresponding to the at least one AP of the first AP MLD changes, the first STA may obtain key BSS parameters corresponding to APs of all stations that are associated with the first AP MLD and that are in the first STAMLD.

Specifically, the first frame may be a multi-link probe request frame.

The multi-link probe request frame may include a link identifier corresponding to one or more APs that are requested. Optionally, the multi-link probe request frame includes an MLD identifier of the first AP MLD to which the one or more APs are affiliated. Optionally, the one or more APs are the associated APs corresponding to all the stations of the first STAMLD.

Optionally, a link identifier corresponding to each AP is located in a station profile (per STA profile) field of a multi-link element, and the MLD identifier of the first AP MLD is located in a common information field of the multi-link element.

Specifically, the second frame may be a multi-link probe response frame.

The multi-link probe response frame may include a link identifier corresponding to one or more APs that are requested. Optionally, the multi-link probe response frame includes the MLD identifier of the first AP MLD to which the one or more APs are affiliated. Optionally, the one or more APs are the associated APs corresponding to all the stations of the first STA MLD.

Optionally, the link identifier of each corresponding AP is located in a station profile subelement (per STA profile subelement) field of the multi-link element, and the MLD identifier of the first AP MLD is located in a common information field of the multi-link element. Each station profile subelement field includes element information of one AP. For example, each station profile subelement field may include information about a changed key BSS parameter, that is, include a corresponding element. For example, if the key BSS parameter change event is inclusion of a channel switch announcement element (Inclusion of a Channel Switch Announcement element), a corresponding element is the channel switch announcement element (Channel Switch Announcement element).

Based on this solution, if the first STA determines that the key BSS parameter corresponding to the at least one AP of the first AP MLD changes, the first STA may further obtain, based on the first frame and the second frame, the key BSS parameters of the APs associated with the second STAs, thereby helping improve communication reliability of the first STAMLD.

Optionally, in the manner 1 and manner 2, the second STAs are stations operating on a link (link) in an enabled (enabled) state.

In an example, if the value of the first information is the same as the value of the second information, the first STA determines that no key BSS parameters corresponding to the APs of the first AP MLD change.

Optionally, there is one piece of first information.

Optionally, the first information is carried in a check beacon field.

Specifically, a value of the check beacon field may indicate whether the key BSS parameter corresponding to the at least one AP of the first AP MLD changes.

It should be understood that when the first information is carried in the check beacon field, there is one check beacon field.

Optionally, the first information is carried in a TIM frame.

Specifically, the TIM frame may be reused, and a check beacon field in the TIM frame carries the first information, for example, includes one octet.

Specifically, a structure of the TIM frame may be shown in FIG. 3.

Based on this solution, this embodiment of this application can be compatible with a non-multi-link station, so that the non-multi-link station can also correctly parse the TIM frame, to learn that no key BSS parameters corresponding to the APs of the first AP MLD change.

In an implementation, an initial value of the first information in the first AP is 0. Specifically, the first information in the first AP MLD may be initialized to 0.

In an implementation, an initial value of first information of a STA of the first STA MLD is 0.

Specifically, the first information in the first STA MLD may be initialized to 0.

In another implementation, an initial value of first information in the first STA MLD is a value provided by an AP, and the value may also be referred to as an initial value.

Specifically, when an association is established, the first AP may provide the value of the first information to the first STA in an association response frame. Alternatively, when an associated TIM broadcast service is established, the first AP may provide the value of the first information to the first STA in a TIM broadcast response frame.

The following describe the method 600 in this embodiment of this application in detail by using the communication system 300 shown in FIG. 2(c) as an example.

For example, FIG. 2(c) is used as an example. It is assumed that initial values of check beacon fields of both the AP 2 (an example of the first AP) in the AP MLD 301 (an example of the first AP MLD) and the STA2 (an example of the first STAMLD) in the STAMLD 302 (an example of the first STA MLD) are 0. The STA 2 is a station of a TIM broadcast service established with the AP 2 associated with the STA 2. Optionally, the STA 1 and the STA 3 are in a doze state.

If a key BSS parameter of any one of the AP 1, the AP 2, and the AP 3 changes, the AP 2 may increase a value of the check beacon field by 1. For example, the AP 2 generates a frame #1, and a value of the check beacon field in the frame #1 is 1 (an example of the first information).

The AP 2 sends the frame #1 to the STA 2 over the link 2, and the STA 2 receives the frame #1. The STA 2 determines, based on the value (1) of the check beacon field in the frame #1 and a previously recorded value (0) of the check beacon field, that a key BSS parameter of at least one AP of the AP MLD 301 changes.

A STA of the STA MLD 302 may obtain the changed key BSS parameter in the following manners:
Manner 1: The STA 2 receives a beacon frame from the AP 2 over the link 2, where the beacon frame includes a key BSS parameter corresponding to the AP 2, the STA 1 and the STA 3 enter an awake state, the STA 1 receives a beacon frame from the AP 1 over the link 1, where the beacon frame includes a key BSS parameter corresponding to the AP 1, and the STA 3 receives a beacon frame from the AP 3 over the link 3, where the beacon frame includes a key BSS parameter corresponding to the AP 3.
Manner 2: The STA 2 sends a first frame to the AP 2 over the link 2, where the first frame is for requesting the key BSS parameter of the AP 1 associated with the STA 1, the key BSS parameter of the AP 2 associated with the STA 2, and the key BSS parameter of the AP 3 associated with the STA 3. Further, the AP 2 sends a second frame to the STA 2 over the link 2, where the second frame includes the key BSS parameter of the AP 1, the key BSS parameter of the AP 2, and the key BSS parameter of the AP 3. For example, the first frame is a multi-link probe request frame, and the second frame is a multi-link probe response frame.

According to this embodiment, the first AP may indicate, to the first STA MLD based on the first information, whether the key BSS parameter corresponding to the at least one AP of the first AP MLD changes. Further, the first STA may determine, based on the first information, whether to obtain a key BSS parameter of an AP of the first AP MLD. In this way, when the key BSS parameter corresponding to the at least one AP of the first AP MLD changes, the first STA can learn in time, so that the first STAMLD and the first AP MLD can communicate normally, thereby helping improve the communication reliability.

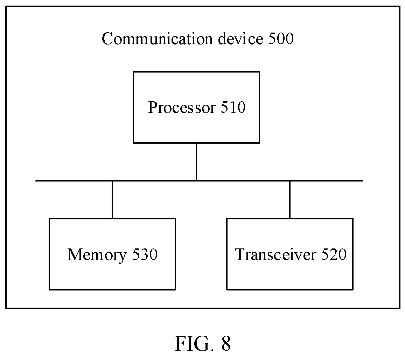

The following describes, with reference to FIG. 7 and FIG. 8, communication apparatuses provided in embodiments of this application.

FIG. 7 is a block diagram of a communication apparatus according to an embodiment of this application. As shown in FIG. 7, the apparatus 400 may include a transceiver unit 410 and a processing unit 420. The transceiver unit 410 may communicate with the outside, and the processing unit 420 is configured to perform data processing. The transceiver unit 410 may also be referred to as a communication interface or a communication unit.

In a possible design, the apparatus 400 may be the first AP MLD device in the foregoing method embodiments, or may be a chip configured to implement a function of the first AP MLD device in the foregoing method embodiments. Alternatively, the apparatus 400 may be a first AP of the first AP MLD, or may be a chip configured to implement a function of the first AP of the first AP MLD.

Specifically, the apparatus includes: the processing unit 420, configured to generate first information, where the first information indicates whether a key BSS parameter corresponding to at least one AP of the apparatus changes; and the transceiver unit 410, configured to send the first information to a first STAMLD.

Optionally, the first information is a count value.

Optionally, if the key BSS parameter corresponding to the at least one AP of the apparatus changes, a value of the first information is increased.

Optionally, if no key BSS parameters corresponding to APs of the apparatus change, a value of the first information remains unchanged.

Optionally, the first information is carried in a check beacon field.

Optionally, the check beacon field is carried in a traffic indication map TIM frame.

Optionally, the first information indicates that the key BSS parameter corresponding to the at least one AP of the apparatus changes, and the transceiver unit 410 is further configured to: receive a first frame from a first STA, where the first frame is for requesting a key BSS parameter corresponding to an AP associated with a second STA, and the second STA is a station that is in the first STA MLD and that is associated with the apparatus; and send a second frame to the first STA, where the second frame includes the key BSS parameter corresponding to the AP associated with the second STA.

Optionally, the second STA is all STAs of the first STAMLD.

Optionally, the key BSS parameter includes one or more of the following: inclusion of a channel switch announcement element, inclusion of an extended channel switch announcement element, modification of the enhanced distributed channel access EDCA parameters element, inclusion of a quiet element, modification of the direct sequence spread spectrum DSSS parameter set, modification of the contention free CF parameter set element, modification of the high throughput HT operation element, inclusion of a wide bandwidth channel switch element, inclusion of a channel switch wrapper element, inclusion of an operating mode notification element, inclusion of a quiet channel element, modification of the very high throughput VHT operation element, modification of the high efficiency HE operation element, insertion of a broadcast TWT element, inclusion of the BSS color change announcement element, modification of the multi-user EDCA parameter set element, modification of the spatial reuse parameter set element, and modification of the extremely high throughput operation element.

For example, the transceiver unit 410 may be divided into a receiving unit and a sending unit. The receiving unit is configured to perform an operation related to receiving of the first AP MLD in the method embodiments, and the sending unit is configured to perform an operation related to sending of the first AP MLD in the method embodiments.

It should be understood that the foregoing content is merely used an example for understanding. The apparatus 400 can further implement other steps, actions, or methods related to the first AP MLD in the method embodiments. Details are not described herein.

In another possible design, the apparatus 400 may be the first STA MLD device in the foregoing method embodiments, or may be a chip configured to implement a function of the first STAMLD device in the foregoing method embodiments. Alternatively, the apparatus 400 may be the first STA and/or the second STA of the first STA MLD, or may be a chip configured to implement a function of the first STA and/or the second STA of the first STAMLD.

Specifically, the apparatus may include: the transceiver unit 410, configured to receive first information, where the first information indicates whether a key BSS parameter corresponding to at least one AP of a first AP MLD changes; and the processing unit 420, configured to determine, based on the first information, whether the key BSS parameter corresponding to the at least one AP of the first AP MLD changes.

Optionally, the first information is a count value.

Optionally, the processing unit 420 is further configured to record the first information.

Optionally, the processing unit 420 is specifically configured to: determine, based on whether a value of the first information is the same as a value of second information, whether the key BSS parameter corresponding to the at least one AP of the first AP MLD changes, where the second information is information received before the apparatus receives the first information, and the second information indicates whether the key BSS parameter corresponding to the at least one AP of the first AP MLD changes.

Optionally, the processing unit 420 is specifically configured to: if the value of the first information is the same as the value of the second information, determine that no key BSS parameters corresponding to APs of the first AP MLD change; and/or if the value of the first information is different from the value of the second information, determine that the key BSS parameter corresponding to the at least one AP of the first AP MLD changes.

Optionally, the value of the first information is different from the value of the second information, and the apparatus further includes: a first transceiver unit, configured to receive a beacon frame, where the beacon frame includes a key BSS parameter corresponding to an AP associated with the second STA, and the second STA is a station that is in the apparatus and that is associated with the first AP MLD.

Optionally, the value of the first information is different from the value of the second information, and the transceiver unit 410 is further configured to: send a first frame, where the first frame is for requesting a key BSS parameter corresponding to an AP associated with the second STA, and the second STA is a station that is in the apparatus and that is associated with the first AP MLD; and receive a second frame, where the second frame includes the key BSS parameter corresponding to the AP associated with the second STA.

Optionally, the second STA is all STAs of the apparatus.

Optionally, the first information is carried in a check beacon field.

Optionally, the check beacon field is carried in a traffic indication map TIM frame.

Optionally, the key BSS parameter includes one or more of the following: inclusion of a channel switch announcement element, inclusion of an extended channel switch announcement element, modification of the EDCA parameters element, inclusion of a quiet element, modification of the DSSS parameter set, modification of the CF parameter set element, modification of the HT operation element, inclusion of a wide bandwidth channel switch element, inclusion of a channel switch wrapper element, inclusion of an operating mode notification element, inclusion of a quiet channel element, modification of the VHT operation element, modification of the HE operation element, insertion of a broadcast TWT element, inclusion of the BSS color change announcement element, modification of the multi-user EDCA parameter set element, modification of the spatial reuse parameter set element, and modification of the extremely high throughput operation element.

For example, the transceiver unit 410 may be divided into a receiving unit and a sending unit. The receiving unit is configured to perform an operation related to receiving of the first STAMLD in the method embodiments, and the sending unit is configured to perform an operation related to sending of the first STA MLD in the method embodiments.

It should be understood that the apparatus 400 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

It should be understood that the foregoing content is merely used an example for understanding. The apparatus 400 can further implement other steps, actions, or methods related to the first STAMLD in the method embodiments. Details are not described herein.

FIG. 8 is a block diagram of a communication device 500 according to an embodiment of this application. As shown in FIG. 8, the communication device 500 includes at least one processor 510 and a transceiver 520. The processor 510 is coupled to a memory, and is configured to execute instructions stored in the memory, to control the transceiver 520 to send a signal and/or receive a signal. Optionally, the communication device 500 further includes a memory 530, configured to store instructions.

It should be understood that the processor 510 and the memory 530 may be integrated into one processing apparatus. The processor 510 is configured to execute program code stored in the memory 530, to implement the foregoing functions. During specific implementation, the memory 530 may alternatively be integrated into the processor 510, or may be independent of the processor 510.

It should be further understood that the transceiver 520 may include a receiver (which is also referred to as a receiver machine) and a transmitter (which is also referred to as a transmitter machine). The transceiver 520 may further include an antenna. There may be one or more antennas. The transceiver 1020 may be a communication interface or an interface circuit.

When the communication device 500 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may be configured to perform the method in the foregoing method embodiment.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

An embodiment of this application further provides a computer-readable storage medium. The computer-readable storage medium stores computer instructions used to implement the method performed by the first AP MLD or the first STA MLD in the foregoing method embodiments.

An embodiment of this application further provides a computer program product including instructions. When the instructions are executed by a computer, the computer is enabled to implement the method performed by the first AP MLD or the first STA MLD in the foregoing method embodiments.

This application further provides a system, including the first AP MLD or the first STA MLD.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

In embodiments of this application, the word like "example" or "for example" is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

It should be noted that, in embodiments of this application, "presetting", "preconfiguring", or the like may be implemented by prestoring corresponding code or a table in a device (for example, a terminal device), or in another manner that may indicate related information. A specific implementation of "presetting", "preconfiguring", or the like is not limited in this application, for example, a preset rule or a preset constant in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. Terms "include", "contain", "have", and variants thereof all mean "include but are not limited to", unless otherwise specifically emphasized in another manner.

It should be understood that, in various embodiments of this application, first, second, and various numbers are merely used for distinguishing for ease of description, and are not used to limit the scope of embodiments of this application. For example, different information is distinguished.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating, by a first access point AP of a first access point multi-link device AP MLD, first information, wherein the first information indicates whether a key basic service set BSS parameter corresponding to at least one AP of the first AP MLD changes; and
sending, by the first AP, the first information to a first station multi-link device STA MLD.

2. The method according to claim 1, wherein the first information is a count value.

3. The method according to claim 1 or 2, wherein if the key BSS parameter corresponding to the at least one AP of the first AP MLD changes, a value of the first information is increased.

4. The method according to claim 1 or 2, wherein if no key BSS parameters corresponding to APs of the first AP MLD change, a value of the first information remains unchanged.

5. The method according to any one of claims 1 to 4, wherein the first information is carried in a check beacon field.

6. The method according to claim 5, wherein the check beacon field is carried in a traffic indication map TIM frame.

7. The method according to any one of claims 1 to 6, wherein the first information indicates that the key BSS parameter corresponding to the at least one AP of the first AP MLD changes, and the method further comprises:
receiving, by the first AP, a first frame, wherein the first frame is for requesting a key BSS parameter corresponding to an AP associated with a second STA, and the second STA is a station that is in the first STAMLD and that is associated with the first AP MLD; and
sending, by the first AP, a second frame, wherein the second frame comprises the key BSS parameter corresponding to the AP associated with the second STA.

8. The method according to claim 7, wherein the second STA is all STAs of the first STA MLD.

9. The method according to any one of claims 1 to 8, wherein the key BSS parameter comprises one or more of the following: inclusion of a channel switch announcement element, inclusion of an extended channel switch announcement element, modification of the enhanced distributed channel access EDCA parameters element, inclusion of a quiet element, modification of the direct sequence spread spectrum DSSS parameter set, modification of the contention free CF parameter set element, modification of the high throughput HT operation element, inclusion of a wide bandwidth channel switch element, inclusion of a channel switch wrapper element, inclusion of an operating mode notification element, inclusion of a quiet channel element, modification of the very high throughput VHT operation element, modification of the high efficiency HE operation element, insertion of a broadcast TWT element, inclusion of the BSS color change announcement element, modification of the multi-user EDCA parameter set element, modification of the spatial reuse parameter set element, and modification of the extremely high throughput operation element.

10. A communication method, comprising:
receiving, by a first STA of a first STAMLD, first information, wherein the first information indicates whether a key BSS parameter corresponding to at least one AP of a first AP MLD changes; and
determining, by the first STA based on the first information, whether the key BSS parameter corresponding to the at least one AP of the first AP MLD changes.

11. The method according to claim 10, wherein the first information is a count value.

12. The method according to claim 10 or 11, wherein the method further comprises: recording, by the first STA, the first information.

13. The method according to any one of claims 10 to 12, wherein the determining, by the first STA based on the first information, whether the key BSS parameter corresponding to the at least one AP of the first AP MLD changes comprises:
determining, by the first station based on whether a value of the first information is the same as a value of second information, whether the key BSS parameter corresponding to the at least one AP of the first AP MLD changes, wherein
the second information is information received before the first STA receives the first information, and the second information indicates whether the key BSS parameter corresponding to the at least one AP of the first AP MLD changes.

14. The method according to claim 13, wherein the determining, by the first station based on whether a value of the first information is the same as a value of second information, whether the key BSS parameter corresponding to the at least one AP of the first AP MLD changes comprises:
if the value of the first information is the same as the value of the second information, determining, by the first STA, that no key BSS parameters corresponding to APs of the first AP MLD change; and/or
if the value of the first information is different from the value of the second information, determining, by the first STA, that the key BSS parameter corresponding to the at least one AP of the first AP MLD changes.

15. The method according to claim 13 or 14, wherein the value of the first information is different from the value of the second information, and the method further comprises:
receiving, by a second STA of the first STAMLD, a beacon frame, wherein the beacon frame comprises a key BSS parameter corresponding to an AP associated with the second STA, and the second STA is a station that is in the first STA MLD and that is associated with the first AP MLD.

16. The method according to claim 13 or 14, wherein the value of the first information is different from the value of the second information, and the method further comprises:
sending, by the first STA, a first frame, wherein the first frame is for requesting a key BSS parameter corresponding to an AP associated with a second STA, and the second STA is a station that is in the first STAMLD and that is associated with the first AP MLD; and
receiving, by the first station, a second frame, wherein the second frame comprises the key BSS parameter corresponding to the AP associated with the second STA.

17. The method according to claim 15 or 16, wherein the second STA is all STAs of the first STAMLD.

18. The method according to any one of claims 10 to 17, wherein the first information is carried in a check beacon field.

19. The method according to claim 18, wherein the check beacon field is carried in a traffic indication map TIM frame.

20. The method according to any one of claims 10 to 19, wherein the key BSS parameter comprises one or more of the following: inclusion of a channel switch announcement element, inclusion of an extended channel switch announcement element, modification of the EDCA parameters element, inclusion of a quiet element, modification of the DSSS parameter set, modification of the CF parameter set element, modification of the HT operation element, inclusion of a wide bandwidth channel switch element, inclusion of a channel switch wrapper element, inclusion of an operating mode notification element, inclusion of a quiet channel element, modification of the VHT operation element, modification of the HE operation element, insertion of a broadcast TWT element, inclusion of the BSS color change announcement element, modification of the multi-user EDCA parameter set element, modification of the spatial reuse parameter set element, and modification of the extremely high throughput operation element.

21. A communication apparatus, comprising a unit or module configured to implement the method according to any one of claims 1 to 9, or a unit or module configured to implement the method according to any one of claims 10 to 20.

22. A communication apparatus, comprising:
a memory, configured to store computer instructions; and
a processor, configured to execute the computer instructions stored in the memory, to enable the communication apparatus to perform the method according to any one of claims 1 to 9, or to enable the communication apparatus to perform the method according to any one of claims 10 to 20.

23. A chip, comprising a processor and an interface, and configured to: invoke a computer program from a memory and run the computer program stored in the memory, to perform the method according to any one of claims 1 to 9 or the method according to any one of claims 10 to 20.

24. A computer-readable storage medium, configured to store a computer program, wherein the computer program comprises instructions for implementing the method according to any one of claims 1 to 9, or comprises instructions for implementing the method according to any one of claims 10 to 20.

25. A computer program product, comprising computer program code, wherein when the computer program code is run on a computer, the computer is enabled to implement the method according to any one of claims 1 to 9, or the computer is enabled to implement the method according to any one of claims 10 to 20.
